# EUROPÄISCHE PATENTSCHRIFT

(11) **EP 3 116 737 B1**
(45) Veröffentlichungstag und Bekanntmachung des Hinweises auf die Patenterteilung: **11.04.2018**
(21) Anmeldenummer: 15708757.8
(22) Anmeldetag: 20.02.2015
(51) Int. Cl.: B60K 37/06

(54) **VERFAHREN UND VORRICHTUNG ZUM BEREITSTELLEN EINER GRAPHISCHEN NUTZERSCHNITTSTELLE IN EINEM FAHRZEUG**
METHOD AND APPARATUS FOR PROVIDING A GRAPHICAL USER INTERFACE IN A VEHICLE
PROCÉDÉ ET DISPOSITIF SERVANT À FOURNIR UNE INTERFACE GRAPHIQUE D'UTILISATEURS DANS UN VÉHICULE

(30) Priorität: 14.03.2014 DE 102014204800
(43) Veröffentlichungstag der Anmeldung: 18.01.2017
(73) Patentinhaber: Volkswagen Aktiengesellschaft, 38440 Wolfsburg (DE)
(72) Erfinder: WILD, Holger, 10179 Berlin (DE); CZELNIK, Mark Peter, 38444 Wolfsburg (DE)
(86) Internationale Anmeldenummer: PCT/EP2015/053605
(87) Internationale Veröffentlichungsnummer: WO 2015/135737

(56) Entgegenhaltungen:
- DE-A1-102008 034 507
- DE-A1-102008 050 803

## Beschreibung

Die vorliegende Erfindung betrifft ein Verfahren und eine Vorrichtung zum Bereitstellen einer graphischen Nutzerschnittstelle in einem Fahrzeug.
Mit der Zunahme elektronischer Einrichtungen im Fahrzeug wurde es erforderlich, eine größere Informationsmenge im Fahrzeug darzustellen. Moderne Fahrzeuge umfassen beispielsweise eine Vielzahl von Fahrerassistenzsystemen, deren Informationen im Fahrzeug angezeigt werden müssen. Des Weiteren umfassen Fahrzeuge vielfach ein Navigationssystem. Mittels eines solchen Navigationssystems können digitale geographische Straßenkarten mit einer Route und gegebenenfalls vielfältigen Zusatzinformationen angezeigt werden. Schließlich umfassen moderne Fahrzeuge häufig Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen anzuzeigen.
Aus diesem Grund werden in Fahrzeugen Multifunktionsbediensysteme eingesetzt, welche eine oder mehrere Multifunktionsanzeige(n) und Bedienelemente umfassen, mit denen die vielfältigen im Fahrzeug enthaltenen Einrichtungen bedient werden können. Die Bedienung wird dabei durch die auf der Multifunktionsanzeige wiedergegebene Information unterstützt bzw. geführt. Ferner kann über das Bediensystem ausgewählt werden, welche Informationen auf der Multifunktionsanzeige angezeigt werden sollen.

Die gattungsbildende DE 10 2008 050 803 A1 beschreibt ein Verfahren zum Anzeigen von Informationen in einem Fahrzeug, bei dem eine Teilmenge einer Gesamtinformation über einen Bildlauf gesteuert werden kann.
Die EP 2 246 214 A1 beschreibt ein Verfahren zum Anzeigen von in Listen geordneter Informationen. Dabei können ausgewählte Listeneinträge im Vordergrund angezeigt werden, während nicht ausgewählte Listeneinträge im Hintergrund angezeigt werden.
Das in der DE 10 2008 034 507 A1 beschriebene Verfahren sieht vor, dass ein zweiseitiges flächiges Objekt auf einem Display angezeigt wird, wobei auf den jeweiligen Seiten des flächigen grafischen Objekts verschiedene Informationen dargestellt werden. In Abhängigkeit von einem Steuersignal kann das grafische Objekt perspektivisch zur anderen Seite gedreht werden, um die entsprechenden anderen Informationen anzuzeigen.

Die Darstellung von Information in einem Fahrzeug erfolgt vielfach dadurch, dass eine Teilmenge einer Gesamtinformation auf der Anzeigefläche in dem Fahrzeug angezeigt wird und der Nutzer die Teilmenge verändern kann. Die Gesamtinformation kann beispielsweise eine Liste mit einer Vielzahl von Listeneinträgen betreffen. Von der Gesamtliste wird eine Teilmenge der Listeneinträge angezeigt. Durch einen Bedienvorgang kann der Nutzer einen Bildlauf (Scrollen) hervorrufen, um andere Listeneinträge zur Anzeige zu bringen. Bei dem Bedienvorgang kann der Nutzer beispielsweise eine Bedienbewegung einer bestimmten Länge ausführen. Ferner kann der Nutzer beispielsweise ein Bedienelement für eine bestimmte Bediendauer betätigen. Die Größe bzw. das Maß der Veränderung der angezeigten Information, d. h. in diesem Fall die Anzahl der Positionen, um die sich die Listeneinträge, die angezeigt werden, verändern, hängt in diesem Fall von der Länge der Bedienbewegung bzw. der Bediendauer ab.

Befinden sich mehrere Nutzer im Fahrzeug, blicken diese von unterschiedlichen Positionen auf die Anzeigefläche. Dabei ergibt sich das Problem, dass eine Darstellung der Information bei einer Bedienung, die beispielsweise für den Beifahrer optimal ist, nicht auch für den Fahrer optimal ist.

Es ist daher Aufgabe der vorliegenden Erfindung, ein Verfahren und eine Vorrichtung bereitzustellen, mit denen auf intuitive und schnelle Art und Weise eine Anzeige einer Teilmenge einer Gesamtinformation für jeden Fahrzeuginsassen individuell erfolgen kann.

Diese Aufgabe wird durch ein Verfahren nach Anspruch 1 und eine Vorrichtung nach Anspruch 11 gelöst. Vorteilhafte Ausgestaltungen und Weiterbildungen sind Gegenstände der abhängigen Ansprüche.

Bei dem erfindungsgemäßen Verfahren wird zumindest ein Objekt zur Wiedergabe einer ersten Teilmenge einer Gesamtinformation in zumindest einer ersten Darstellungsart auf einer Anzeigefläche graphisch dargestellt. Weiterhin wird die Bedienabsicht eines Nutzers erfasst. Die Relativposition des Nutzers bezüglich der Anzeigefläche wird ermittelt. Wenn die Bedienabsicht erfasst worden ist, wird das Objekt in eine zweite Darstellungsart überführt, bei der das Objekt perspektivisch oder dreidimensional um eine Achse um einen Schwenkwinkel in Richtung der Relativposition geschwenkt angezeigt wird.

Bei dem Objekt kann es sich beispielsweise um ein flächiges Objekt handeln, das z. B. in der ersten Darstellungsart in einer Aufsicht gezeigt wird. In diesem Fall kann das Objekt das Display oder einen Teilbereich des Displays vollständig ausfüllen. Beim Übergang von der ersten Darstellungsart in die zweite Darstellungsart wird das Objekt z. B. perspektivisch geschwenkt, so dass sich zwar gegebenenfalls die von dem Objekt eingenommene Fläche auf dem Display verkleinert, die Teile des Objekts, die perspektivisch hinten dargestellt werden, verkleinern sich jedoch hinsichtlich ihrer absoluten Größe auf dem Display, so dass insgesamt eine größere Teilmenge der Gesamtinformation so wiedergegeben wird, dass sie schnell und intuitiv vom Betrachter erfasst werden kann. In Analogie zu einem realen Objekt, wie z. B. einer Karte von der Größe des Displays, ist es nämlich möglich, durch einen Ausschnitt der Größe des Displays aufgrund der perspektivischen Darstellung eine größere Karte zu betrachten, wenn diese um eine Achse nach hinten weggeschwenkt ist. Auf dieser größeren Karte kann man somit auch eine größere Teilmenge der Gesamtinformation unterbringen, welche durch den Ausschnitt des Displays betrachtet werden kann.

Das dreidimensionale Schwenken des Objekts kann autostereoskopisch angezeigt werden. In diesem Fall sieht im Unterschied zur perspektivischen Darstellung das eine Auge des Betrachters ein geringfügig anderes Bild als das andere Auge, so dass eine reale dreidimensionale Darstellung erreicht wird. Bei einer autostereoskopischen Anzeige sind dabei keine speziellen Vorrichtungen, wie z. B. Brillen oder dergleichen, nötig, um den dreidimensionalen Effekt beim Betrachten der Anzeige hervorzurufen.

Der maximale Schwenkwinkel liegt insbesondere in einem Bereich von 35° bis 55°. Wird der maximale Schwenkwinkel nämlich zu groß, dann ist die Projektion eines perspektivisch oder dreidimensional dargestellten Objekts auf die Anzeigefläche zu klein, um die wiedergegebene Teilmenge der Gesamtinformation noch erkennen zu können.

In einer Ausgestaltung des erfindungsgemäßen Verfahrens wird ein Blickwinkel, unter dem der Nutzer von der Relativposition aus auf die Anzeigefläche blickt, ermittelt. Der Blickwinkel wird dabei in eine horizontale und eine vertikale Komponente geteilt, wobei die horizontale Komponente eine Winkelkomponente an dem Blickwinkel umfasst, den die Blickrichtung des Nutzers von einer vertikalen, in Fahrzeuglängsrichtung angeordneten Ebene nach rechts oder links abweicht, und die vertikale Komponente eine Winkelkomponente an dem Blickwinkel umfasst, den die Blickrichtung des Nutzers von einer horizontal, in Fahrzeuglängsrichtung angeordneten Ebene nach oben oder unten abweicht. Der Schwenkwinkel des Objekts in der zweiten Darstellungsart ist dann von der horizontalen und/oder vertikalen Komponente des Blickwinkels abhängig. Dadurch kann das Objekt vorteilhafterweise in Richtung der Position des Nutzer geschwenkt werden, ohne eine gesamte Anzeigevorrichtung verschwenken zu müssen. Das Schwenken des Objekts in Abhängigkeit von dem Blickwinkel des Nutzers führt dann zu einer optimalen Sicht während der Bedienung auf das Objekt aus beinahe jeder Sitzposition des Nutzers im Fahrzeug.

Die Achse, um welche das Objekt geschwenkt wird, verläuft dabei insbesondere im Wesentlichen horizontal oder im Wesentlichen vertikal durch das Objekt. Insbesondere kann das Objekt auch um die horizontale und die vertikale Achse geschwenkt werden. Dann kann vorteilhafterweise die horizontale und vertikale Komponente des Blickwinkels gleichzeitig in dem Schwenkwinkel berücksichtigt werden. Insbesondere kann der Schwenkwinkel des Objekts dann der Kopf- und/oder Augenhaltung des Nutzers nachgeführt werden.

Insbesondere wird ermittelt, ob ein erster oder ein zweiter Nutzer die Bedienabsicht hat, wobei für den ersten Nutzer eine erste Relativposition und für den zweiten Nutzer eine zweite Relativposition ermittelt wird. Dies ermöglicht, dass insbesondere zwischen dem Fahrer und dem Beifahrer unterschieden wird. Dabei kann dann vereinfacht das Objekt einfach in Richtung des Fahrers oder des Beifahrers geschwenkt werden. Der Schwenkwinkel des Objekts in Richtung der ersten Relativposition kann dabei insbesondere genauso groß sein wie der Schwenkwinkel in Richtung der zweiten Relativposition.

Bevorzugt wird als Bedienabsicht eine Annäherung eines Betätigungsobjekts seitens des Nutzers an die Anzeigefläche erfasst. Das Objekt geht dann bereits in die zweite Darstellungsart über, wenn sich der Nutzer mit einem Betätigungsobjekt, beispielsweise seiner Hand, der Anzeigefläche nähert.

In einer anderen Ausgestaltung wird bei der zweiten Darstellungsart angrenzend an die erste Teilmenge der Gesamtinformation eine zweite Teilmenge der Gesamtinformation angezeigt. Dem Nutzer wird dann bereits bei Annäherung seiner Hand an die Anzeigefläche angezeigt, welche Anzeigeinhalte er als nächstes zur Anzeige bringen kann. Dies erlaubt eine besonders schnelle und vor allem intuitive Bedienung der graphischen Nutzerschnittstelle.

Insbesondere grenzt in der zweiten Darstellungsart eine zweite Teilmenge der Gesamtinformation perspektivisch oder dreidimensional vorne und/oder hinten an die erste Teilmenge der Gesamtinformation. Dadurch wird die erste Teilmenge der Gesamtinformation innerhalb der Gesamtmenge der Gesamtinformation eingeordnet.

Die Gesamtinformation wird insbesondere in graphischen Objekten wiedergegeben, wobei jeder Information der Gesamtinformation ein graphisches Objekt zugeordnet ist. In der ersten

Darstellungsart werden weniger graphische Objekte angezeigt als in der zweiten Darstellungsart. Der Übergang von der ersten Darstellungsart in die zweite Darstellungsart gibt dem Nutzer somit eine große Vorschau auf weitere graphische Objekte. Die Veränderung der angezeigten Teilmenge der Gesamtinformation entspricht in diesem Fall einem Bildlauf bzw. einem Scrollen durch die graphischen Objekte. Für den Bedienvorgang des Bildlaufs durch die graphischen Objekte werden die graphischen Objekte somit auf dem perspektivisch oder dreidimensional geschwenkten Objekt dargestellt, bei dem eine größere Anzahl von graphischen Objekten wiedergegeben sind. Der Nutzer kann auf diese Weise schneller durch die Gesamtmenge der Gesamtinformation scrollen.

Weiterhin wird die erste Teilmenge der Gesamtinformation in der zweiten Darstellungsart im Vergleich zur zweiten Teilmenge der Gesamtinformation hervorgehoben dargestellt. Dabei kann die erste Teilmenge der Gesamtinformation insbesondere farbig dargestellt werden, während die zweite Teilmenge der Gesamtinformation grau dargestellt wird.

In einer weiteren Ausgestaltung wird in der zweiten Darstellungsart die erste Teilmenge der Gesamtinformation in einem Bereich auf der Anzeigefläche angezeigt, der von einer ersten Begrenzung und einer zweiten Begrenzung begrenzt ist, wobei die erste Teilmenge der Gesamtinformation im Vergleich zur zweiten Teilmenge der Gesamtinformation hervorgehoben dargestellt wird. Die erste Teilmenge der Gesamtinformation und die zweite Teilmenge der Gesamtinformation werden durch eine Bedienaktion des Nutzers in ihren Positionen auf der Anzeigefläche verschoben, wobei ein erster Teil der ersten Teilmenge aus dem Bereich herausgeschoben wird, während ein zweiter Teil der zweiten Teilmenge in den Bereich hineingeschoben wird, so dass der erste Teil nicht mehr hervorgehoben dargestellt wird und der zweite Teil hervorgehoben dargestellt wird. Die Bedienaktion kann dabei insbesondere eine Geste des Nutzers, beispielsweise eine Wischgeste, sein. Durch die Geste kann der Nutzer die Richtung festlegen, in welche die Gesamtinformation verschoben werden soll. Durch die Bedienaktion erzeugt der Nutzer insbesondere einen Bildlauf.

In dem Bereich wird insbesondere die Information dargestellt, welche nach Beendigung der Bedienaktion in der ersten Darstellungsart auf der Anzeigefläche angezeigt wird und somit eine neue erste Teilmenge der Gesamtinformation bildet. Der Nutzer kann dadurch bereits in der zweiten Darstellungsart sehen, welche Information ihm in der ersten Darstellungsart angezeigt wird.

Bevorzugt wird eine Leiste mit einer Markierung angezeigt, wobei die Leiste die Menge der Gesamtinformation repräsentiert und die Position der Markierung auf der Leiste in Abhängigkeit von der Bedienaktion verschoben wird, wobei die Position der Markierung auf der Leiste die Position der Teilmenge der Gesamtinformation innerhalb der Menge der Gesamtinformation darstellt. Die Leiste mit Markierung stellt insbesondere einen sogenannten Scroll-Bar dar. Dabei zeigt insbesondere eine Länge der Markierung die Größe der Menge der Gesamtinformation an. Je kürzer die Markierung ausgestaltet ist, desto größer ist die Gesamtmenge.

Ferner betrifft die Erfindung eine Vorrichtung zum Bereitstellen einer graphischen Nutzerschnittstelle. Die Vorrichtung umfasst dabei eine Anzeigefläche zur graphischen Darstellung zumindest eines Objekts zur Wiedergabe einer ersten Teilmenge einer Gesamtinformation. Weiterhin umfasst die Vorrichtung eine Erfassungseinrichtung, mittels welcher eine Bedienabsicht eines Nutzers erfassbar ist, und eine Ermittlungseinheit, mittels welcher eine Relativposition des Nutzers bezüglich der Anzeigefläche ermittelbar ist. Schließlich umfasst die Vorrichtung eine Steuereinrichtung, mittels welcher Graphikdaten erzeugbar sind, die das Objekt in einer ersten Darstellungsart wiedergeben, und mittels welcher das Objekt in eine zweite Darstellungsart überführbar ist, bei der das Objekt um eine Achse um einen Schwenkwinkel in Richtung der Relativposition geschwenkt anzeigbar ist, wenn die Bedienabsicht erfasst worden ist. Die erfindungsgemäße Vorrichtung ist insbesondere zum Ausführen des erfindungsgemäßen Verfahrens geeignet und weist daher alle Vorteile des Verfahrens auf.

Die erfindungsgemäße Vorrichtung ist insbesondere so ausgestaltet, dass sie die vorstehend beschriebenen Verfahrensschritte teilweise oder vollständig ausführen kann.

In einer Ausgestaltung umfasst die Erfassungseinrichtung eine Annäherungserfassungseinrichtung, mittels welcher eine Annäherung eines Betätigungsobjekts an die Anzeigefläche erfassbar ist. Dann kann die Bedienabsicht bereits erfasst werden, wenn das Betätigungsobjekt in einen Erfassungsraum eintritt, der beispielsweise vor der Anzeigefläche ausgebildet ist.

Insbesondere ist mit der Erfassungseinrichtung ein Blickwinkel erfassbar, unter welchem der Nutzer von der Relativposition aus auf die Anzeigefläche blickt. Dabei kann die Erfassungseinrichtung den Blickwinkel insbesondere in eine horizontale und eine vertikale Komponente aufteilen. Dadurch ist vorteilhafterweise eine sehr individuelle Anzeige für das Objekt auf der Anzeigefläche erzeugbar.

Weiterhin kann mit der Ermittlungseinheit ermittelbar sein, ob ein erster oder ein zweiter Nutzer die Bedienabsicht hat, wobei dem ersten Nutzer eine erste Relativposition und dem zweiten Nutzer eine zweite Relativposition zugeordnet ist.

Weiterhin kann die Erfassungseinrichtung eine berührungsempfindliche Oberfläche umfassen, welche auf der Anzeigefläche angeordnet ist. Dadurch können weitere Bedienaktionen durch Berühren der Anzeigefläche ausgeführt werden. Die Anzeigefläche stellt dann einen berührungsempfindlichen Bildschirm bereit.

Ferner betrifft die Erfindung ein Fahrzeug, das eine erfindungsgemäße Vorrichtung umfasst.

Im Folgenden wird die Erfindung anhand von Ausführungsbeispielen mit Bezug zu den Zeichnungen erläutert.
- Figur 1: zeigt ein Ausführungsbeispiel der erfindungsgemäßen Vorrichtung,
- Figur 2: zeigt schematisch eine Sicht von oben in den Fahrzeuginnenraum,
- Figur 3: zeigt eine Anordnung der erfindungsgemäßen Vorrichtung in einem Fahrzeug,
- Figur 4 und 5: zeigen Anzeigen, wie sie von einem ersten Ausführungsbeispiel des Verfahrens erzeugt werden,
- Figur 6: zeigt ein Flussdiagramm für ein erstes Ausführungsbeispiel des erfindungsgemäßen Verfahrens,
- Figur 7: zeigt eine weitere Anzeige, wie sie von dem ersten Ausführungsbeispiel des erfindungsgemäßen Verfahrens erzeugt werden kann, und
- Figur 8: zeigt eine Anzeige, wie sie von einem zweiten Ausführungsbeispiel des erfindungsgemäßen Verfahrens auf der Anzeigefläche erzeugt wird.

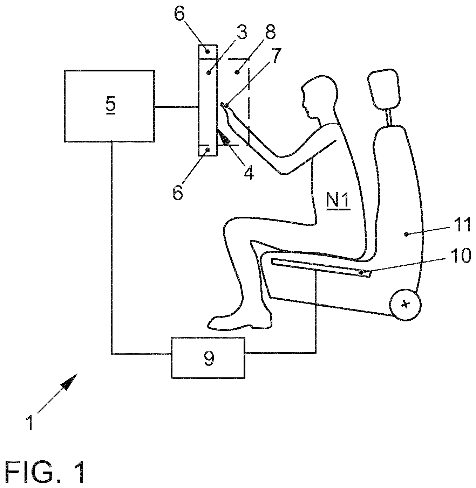

Mit Bezug zu den Figuren 1, 2 und 3 wird ein erstes Ausführungsbeispiel der erfindungsgemäßen Vorrichtung 1 sowie eine Anordnung der erfindungsgemäßen Vorrichtung 1 in einem Fahrzeug 2 erläutert:

Die Vorrichtung 1 dient der Bereitstellung einer Nutzerschnittstelle in einem Fahrzeug 2. Sie umfasst eine Anzeigevorrichtung 3 mit einer Anzeigefläche 4. Die Anzeigefläche 4 kann von einem Display beliebiger Bauart bereitgestellt werden. Die Anzeigevorrichtung 3 ist mit einer Steuereinrichtung 5 verbunden. Die Steuereinrichtung 5 erzeugt Graphikdaten, die mittels der Anzeigefläche 4 im Innenraum des Fahrzeugs 2 für die Fahrzeuginsassen sichtbar wiedergegeben werden. Es können für die Nutzerschnittstelle insbesondere Bedienobjekte und Anzeigeobjekte angezeigt werden. Diese Bedien- und Anzeigeobjekte unterstützen den Nutzer N1 bei der Steuerung von Einrichtungen des Fahrzeugs. Ferner dienen die Anzeigeobjekte der Informationsvermittlung.

Des Weiteren ist eine Annäherungserfassungseinrichtung 6 vorgesehen, mit der eine Annäherung eines Betätigungsobjekts 7, beispielsweise einer Hand eines Nutzers N1, an die Anzeigefläche 4 in einem Erfassungsraum 8 erfasst werden können. Der Erfassungsraum 8 ist vor der Anzeigefläche 4 angeordnet. Die Annäherungserfassungseinrichtung 6 ist Teil einer Eingabevorrichtung für die Nutzerschnittstelle. Der Nutzer N1 kann im Erfassungsraum 8 Gesten ausführen, um die Anzeige auf der Anzeigefläche 4 zu steuern.

Die Annäherungserfassungseinrichtung 6 kann z. B. Infrarotlichtquellen und Infrarotlichtdetektoren umfassen. Alternativ kann die Annäherungserfassungseinrichtung 6 ein optisches System umfassen, welches eine Kamera umfasst, welche die im Erfassungsraum 8 ausgeführte Geste aufnimmt. Des Weiteren kann das optische System eine lichtemittierende Diode umfassen, die z. B. rechteckförmiges amplitudenmoduliertes Licht emittiert. Dieses Licht wird an der Hand des Nutzers N1, welcher die Geste im Erfassungsraum 8 ausführt, reflektiert und gelangt nach der Reflexion zu einer Photodiode der Annäherungserfassungseinrichtung 6. Eine weitere lichtemittierende Diode emittiert ebenfalls rechteckförmiges amplitudenmoduliertes Licht zur Photodiode, welches jedoch um 180° phasenversetzt ist. Bei der Photodiode überlagern sich die beiden Lichtsignale und heben sich auf, falls sie genau die gleiche Amplitude aufweisen. Falls sich die Signale bei der Photodiode nicht aufheben, wird die Lichtemission der zweiten Diode über einen Regelkreis so geregelt, dass sich das Gesamtempfangssignal wieder zu Null ergänzt. Ändert sich die Position der Hand des Nutzers N1 im Erfassungsraum 8, ändert sich auch der Lichtanteil, welcher von der ersten lichtemittierenden Diode zur Photodiode über die Reflexion an der Hand gelangt. Dies bewirkt ein Nachführen der Intensität der zweiten lichtemittierenden Diode durch den Regelkreis. Das Regelsignal ist somit ein Maß für die Reflexion des Lichts, welches von der ersten Diode emittiert wird, an der Hand des Nutzers N1, welcher die Geste ausführt. Auf diese Weise lässt sich aus dem Regelkreis ein Signal ableiten, welches für die Position der Hand des Nutzers N1 charakteristisch ist.

Weiterhin umfasst die Vorrichtung 1 eine Ermittlungseinrichtung 9, mittels welcher erfasst werden kann, ob die Bedienabsicht im Erfassungsraum 8 von einem ersten Nutzer N1 oder einem zweiten Nutzer N2 ausgeführt wird. Der erste Nutzer N1 ist dabei insbesondere der Fahrer des Fahrzeugs 2. Der zweite Nutzer N2 ist insbesondere der Beifahrer. Weiterhin kann die Ermittlungseinrichtung 9 eine erste Relativposition P1 des ersten Nutzers N1 bezüglich der Anzeigefläche 4 und eine zweite Relativposition P2 des zweiten Nutzers N2 bezüglich der Anzeigefläche 4 ermitteln.

Die Bestimmung der Relativposition eines Nutzers bezüglich der Anzeigefläche 4 wird beispielhaft an der Relativposition P1 des ersten Nutzers N1 erläutert, erfolgt jedoch für die Relativposition P2 des zweiten Nutzers N2 analog:

Wie in Figur 1 gezeigt, befindet sich im Sitz 11 des ersten Nutzers N1 eine Elektrodenanordnung 10. Über diese Elektrodenanordnung 10 kann ein Identifikationscode kapazitiv in den Körper des ersten Nutzers N1 eingekoppelt werden. Der Identifikationscode kann dabei die Relativposition P1 des ersten Nutzers N1 bezüglich der Anzeigefläche 4, die Sitzposition des ersten Nutzers N1 sowie den ersten Nutzer N1 selbst identifizieren. Der Identifikationscode wird über den Körper des ersten Nutzers N1 übertragen und bei der Fingerspitze des ersten Nutzers N1 kapazitiv ausgekoppelt, so dass er an eine in der Anzeigevorrichtung 3 untergebrachten Empfangseinrichtung übertragen werden kann.

Die Empfangseinrichtung ist mit der Steuervorrichtung 5 verbunden, die wiederum mit der Elektrodeneinrichtung 10 kapazitiv gekoppelt ist. Bei den kapazitiven Kopplungen zwischen der Elektrodeneinrichtung 10 und dem ersten Nutzer N1 einerseits und dem ersten Nutzer N1 und der Empfangseinrichtung in der Anzeigevorrichtung 3 andererseits wird ein elektrisches Feld mit einer sehr begrenzten Reichweite von z.B. einigen Zentimetern oder Dezimetern genutzt. Die Reichweite dieses Feldes entspricht im Wesentlichen der Größe des Erfassungsraums 8. Für die Signalübertragung werden relativ niedrige Trägerfrequenzen von einigen 100 kH genutzt, die zu quasi-statischen Feldern führen, d.h. Feldern, für welche weitgehend die für statische Felder zutreffenden physikalischen Ansätze gelten. Hinsichtlich weiterer Details dieser Signalübertragung wird auf die DE 10 2004 048 956 A1 und die darin zitierte weitere Literatur verwiesen, die hiermit durch Bezugnahme in die vorliegende Anmeldung aufgenommen werden. Es können insbesondere die in der DE 10 2004 048 956 A1 verwendeten Schaltungseinrichtungen Anwendung finden.

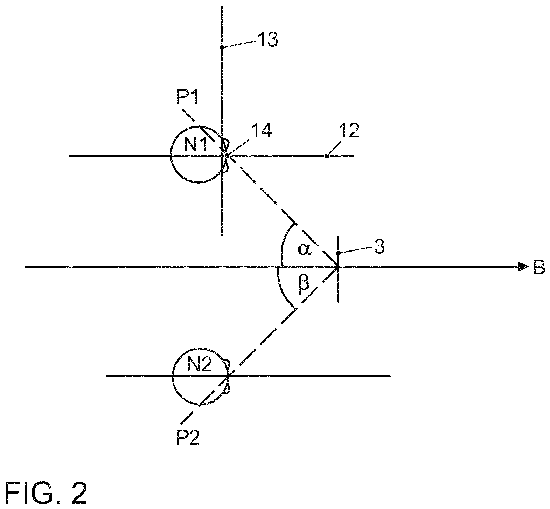

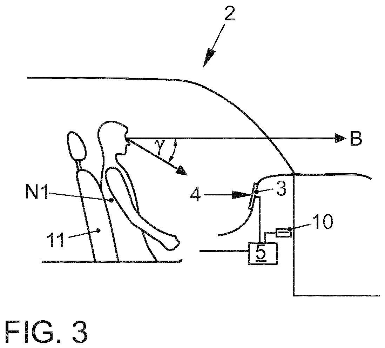

Mit Bezug zu den Figuren 2 und 3 wird erläutert, wie ein Blickwinkel des ersten N1 und/oder zweiten Nutzers N2 auf die Anzeigefläche 4 ermittelt werden kann:

Dies wird wieder beispielhaft für den ersten Nutzer N1 erläutert, verläuft für den Nutzer N2 allerdings analog.

Dabei wird zunächst die Kopf- und/oder Augenhaltung des ersten Nutzers N1 bei einer Bedienabsicht erfasst und diese mit einem Referenzbild verglichen. Das Referenzbild kann dabei ein Bild des ersten Nutzers N1 selbst sein, wobei das Bild dann die Kopf- und/oder Augenhaltung des ersten Nutzers N1 bei einem Blick auf die Fahrbahn beinhaltet. Dadurch kann dann festgestellt werden, wie sich die Kopf- und/oder Augenhaltung des ersten Nutzers N1 bei einem Blick auf die Anzeigefläche 4 verändert. Alternativ kann das Referenzbild auch ein Musterbild sein.

Dann wird über eine Abweichung der Kopf- und/oder Augenhaltung des ersten Nutzers N1 nach links oder rechts von einer vertikalen, parallel zur Fahrzeuglängsrichtung B angeordneten Ebene 12 bestimmt. Die vertikale Ebene 12 schneidet insbesondere den Mittelpunkt 14 zwischen den Augen des ersten Nutzers N1. Mit Kopf- und/oder Augenhaltung ist in diesem Fall insbesondere die Drehung des Kopfes um ein Achse, welche in der Ebene 12 liegt, gemeint.

Eine vertikale Komponente γ wird über eine Abweichung der Kopf- und/oder Augenhaltung des ersten Nutzers N1 nach oben oder unten von einer horizontalen, senkrecht zur vertikalen Ebene 12 angeordneten Ebene 13 ermittelt. Die horizontale Ebene 13 schneidet dabei insbesondere die Augen des ersten Nutzers N1. Mit Kopf- und/oder Augenhaltung ist in diesem Fall insbesondere die Drehung des Kopfes um ein Achse, welche in der Ebene 13 liegt, gemeint.

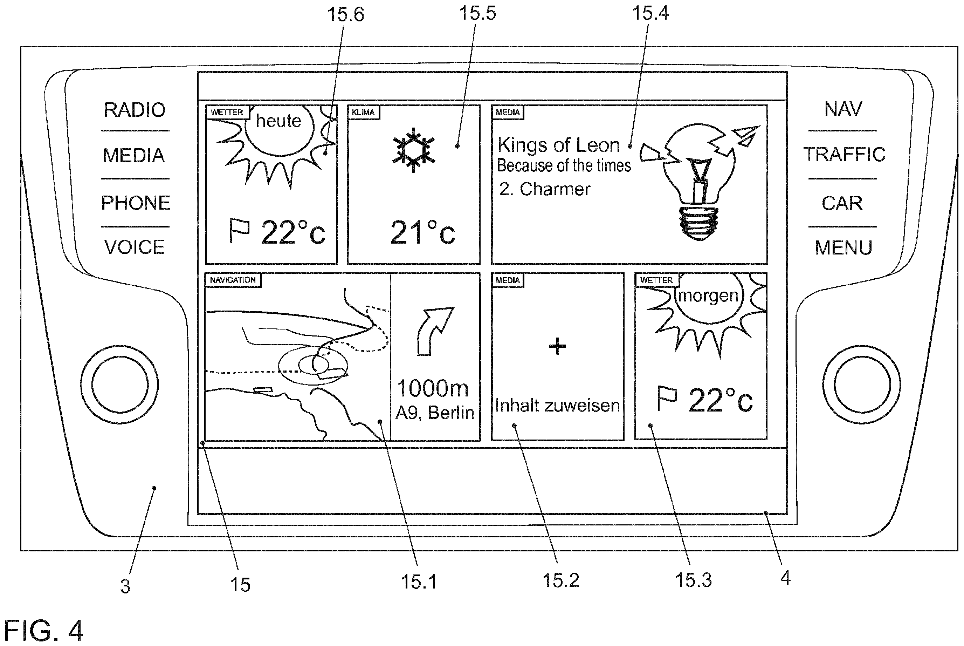

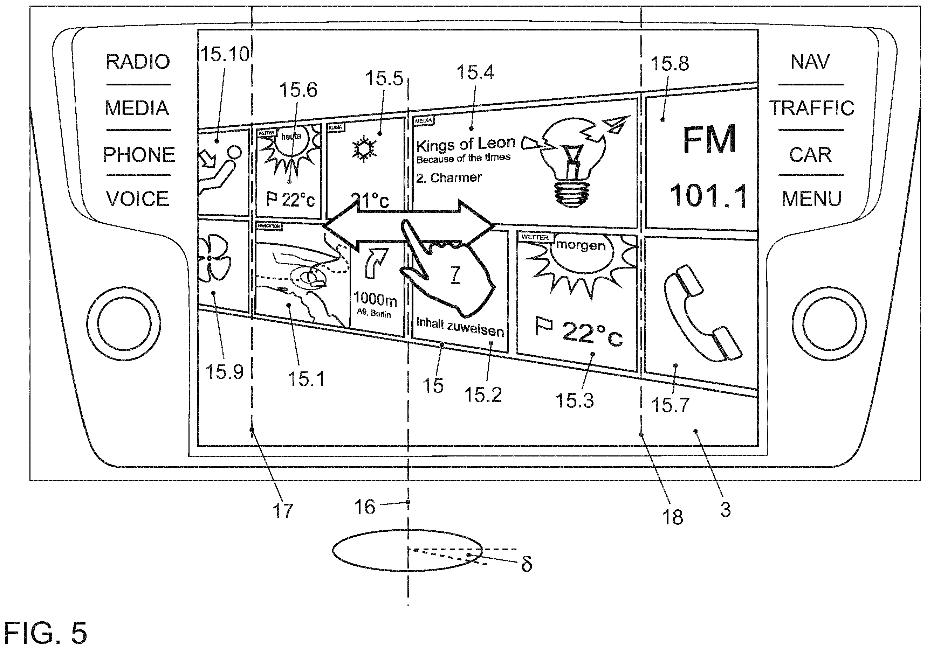

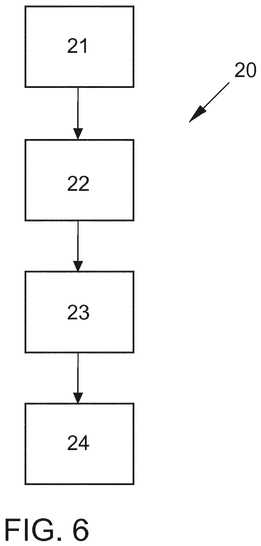

Mit Bezug zu den Figuren 4 bis 6 wird ein ersten Ausführungsbeispiel des erfindungsgemäßen Verfahrens erläutert:

Dabei ist in Figur 4 eine Anzeige auf der Anzeigefläche vor Beginn des erfindungsgemäßen Verfahrens gezeigt, in dem ein Objekt 15 in einer ersten Darstellungsart angezeigt wird.

Das Objekt 15 enthält dabei zunächst eine erste Teilmenge einer Gesamtinformation, die in mehreren graphischen Objekten 15.1 bis 15.6 angezeigt wird. Dabei können die unterschiedlichen graphischen Objekte 15.1 bis 15.6 Informationen unterschiedlicher Kategorien enthalten. Das graphische Objekte 15.1 enthält beispielsweise Navigationsinformation, dem graphischen Objekt 15.2 ist momentan keine anzuzeigende Information zugewiesen. Das graphische Objekte 15.3 enthält, wie das graphische Objekt 15.6 und das graphische Objekt 15.5, Informationen zum Wetter oder Klima. Das graphische Objekt 15.4 zeigt das momentan abgespielte Musikalbum an.

In Schritt 21 des erfindungsgemäßen Verfahrens 20 wird eine Bedienabsicht seitens des ersten Nutzers N1, also des Fahrers erkannt. Dazu hat der erste Nutzer N1 ein Betätigungsobjekt 7, beispielsweise seine Hand 7, in den Erfassungsraum 8 bewegt.

In Schritt 22 wird die horizontale Komponente α des Blickwinkels des ersten Nutzers N1 auf die Anzeigefläche 4 ermittelt.

In Schritt 23 wird die Anzeigefläche 4 derart angesteuert, dass das Objekt 15 in eine zweite Darstellungsart überführt wird. Dabei wird das Objekt 15 um eine vertikal durch das Objekt 15 verlaufende Achse 16, die beispielsweise in der Mitte des Objekts 15 angeordnet ist, um den Schwenkwinkel δ geschwenkt dargestellt. Der Schwenkwinkel δ stimmt dabei wertmäßig mit dem Wert der horizontalen Komponente α des Blickwinkels des ersten Nutzers N1 überein. Dieser beträgt beispielsweise 10°. Der Schwenkwinkel δ sollte einen Wert von 55° nicht übersteigen, da sonst eine Projektion des perspektivisch dargestellten Objekts 15 auf die Anzeigefläche 4 zu klein werden kann.

Insbesondere kann auch die vertikale Komponente γ des Blickwinkels in dem Schwenkwinkel δ berücksichtigt werden. Das Objekt 15 würde dann nicht nur um die vertikale Achse 16, sondern auch um eine horizontale Achse geschwenkt werden.

Insbesondere werden auch die graphischen Objekte 15.1 bis 15.6 um die Achse 16 um den Schwenkwinkel δ mitgeschwenkt. Dadurch bleibt die in den graphischen Objekten 15.1 bis 15.6 Objekten enthaltene Gesamtinformation in dem Objekt 15 ganzheitlich erhalten.

Nach dem Schritt 23 wird das Objekt also perspektivisch angezeigt, wobei die Größe des Objekts 15 von rechts vorne nach links hinten abnimmt. Dies kann insbesondere an den Seitenlängen des Objekts 15 nachvollzogen werden. Auch die in den graphischen Objekten 15.1 bis 15.6 dargestellte erste Teilmenge der Gesamtinformation nimmt dabei größenmäßig von rechts vorne nach links hinten ab. Der Größenverlauf, d.h. das Maß der Abnahme der Größe, des Objekts 15 sowie der ersten Teilmenge der Gesamtinformation 15.1 bis 15.6 ist dabei insbesondere von der Größe des Schwenkwinkels δ abhängig. Je größer der Schwenkwinkel δ ist, desto extremer wird der Größenunterschied des Objekts 15 zwischen rechts vorne und links hinten ausfallen.

Weiterhin wird perspektivisch hinten angrenzend an die graphischen Objekte 15.6 und 15.1 sowie vorne angrenzend an die graphischen Objekte 15.4 und 15.3 der ersten Teilmenge der Gesamtinformation weitere graphische Objekte 15.7 bis 15.10, die einer zweiten Teilmenge der Gesamtinformation zugehörig sind, angezeigt. Diese schließen nahtlos an die graphischen Objekte 15.1 bis 15.6 an. Dies bedeutet, dass die beiden graphischen Objekte 15.7 und 15.8 mit der darin angezeigten Information die am größten dargestellten Objekte 15.1 bis 15.10 sind, während die graphischen Objekte 15.9 und 15.10 die am kleinsten dargestellten graphischen Objekte 15.1 bis 15.10 sind.

Die graphischen Objekte 15.1 bis 15.6 der ersten Teilmenge werden weiterhin innerhalb von zwei Begrenzungslinien 17 und 18 angezeigt. Diese Begrenzungslinien 17 und 18 begrenzen einen Bereich 19 auf der Anzeigefläche 4 in der zweiten Darstellungsart des Objekts 15. In diesem Bereich werden alle sich befindenden Informationen und darin eintretende Informationen hervorgehoben dargestellt. Beispielsweise kann die erste Teilmenge der Gesamtinformation, also die graphischen Objekte 15.1 bis 15.6, farbig angezeigt werden, während die zweite Teilmenge der Gesamtinformation, also die graphischen Objekte 15.7 bis 15.10 grau, dargestellt wird.

Das Objekt 15 zeigt also nach Schritt 23 eine größere Menge an Gesamtinformation an. Dadurch wird dem ersten Nutzer N1 nun angezeigt, welche Gesamtinformation er mit weiteren Bedienaktionen zur Anzeige bringen kann.

Der erste Nutzer N1 führt eine Wischgeste vor der Anzeigefläche 4 in dem Erfassungsraum 8 nach links aus. Dadurch ruft der erste Nutzer N1 einen Bildlauf bzw. ein Scrollen hervor. Dabei werden aufeinander folgende graphische Objekte wiedergegeben, bei denen nacheinander graphische Objekte mit Informationen von der Anzeigefläche 4 verschwinden und andere graphische Objekte auf der Anzeigefläche 4 angezeigt werden. Führt der erste Nutzer N1 also eine Wischgeste nach links aus, würden zunächst die graphischen Objekte 15.9 und 15.10 links von der Anzeigefläche 4 verschwinden, die graphischen Objekte 15.1 und 15.6 zumindest teilweise aus dem Bereich 19 nach links austreten, die graphischen Objekte 15.7 und 15.8 rechts zumindest teilweise in den Bereich 19 eintreten und graphische Objekte rechts neben den graphischen Objekten 15.7 und 15.8 auf der Anzeigefläche zumindest teilweise angezeigt werden.

In Schritt 24 wird die Geste von der Annäherungserfassungseinrichtung 6 erkannt und in ein Steuersignal umgesetzt, welches die Anzeigefläche 4 derart ansteuert, dass alle in dem Objekt 15 angezeigten graphischen Objekte 15.1 bis 15.10 nach hinten links verschoben werden.

Dabei treten die graphischen Objekte in Abhängigkeit von der Größe der Verschiebung 15.7 und 15.8 in den Bereich 19 ein. Bei Eintritt in den Bereich 19 werden die grau dargestellten graphischen Objekte 15.7 und 15.8 zu dem Teil, zu dem sie in den Bereich 19 eingetreten sind, farbig dargestellt.

Gleichzeitig treten auf der Seite der Begrenzungslinie 17 die graphischen Objekte 15.6 und 15.1 aus dem Bereich 19 aus. Diese werden dann, ebenso in Abhängigkeit von der Größe der Verschiebung, zu dem Teil, zu dem sie aus dem Bereich 19 austreten, ausgegraut dargestellt.

Wird die Bedienaktion, also die Wischgeste beendet, was dadurch erfasst wird, dass das Betätigungsobjekt 7, also die Hand, des ersten Nutzers N1 den Erfassungsraum 8 wieder verlässt, wechselt das Objekt 15 wieder in die erste Darstellungsart. Dabei wird nun als erste Teilmenge der Gesamtinformation, die graphischen Objekte 15.2 bis 15.5, 15.7 und 15.8 angezeigt, die sich in der zweiten Darstellungsart innerhalb des Bereichs 19 befinden.

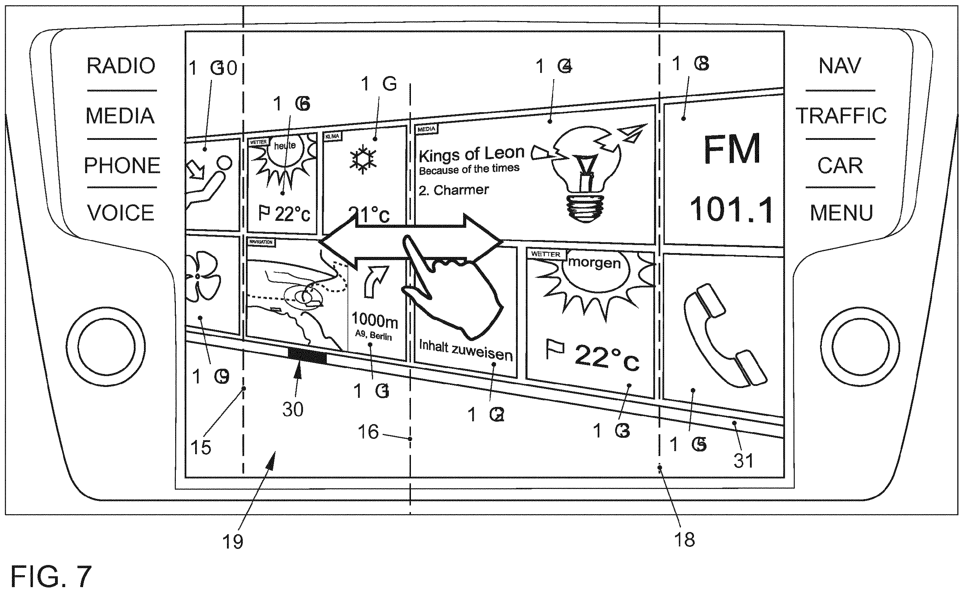

Es kann zusätzlich in Schritt 23 unterhalb des Objekts 15 eine Leiste 31 angezeigt werden. Diese ist in Figur 7 gezeigt. Die Leiste 31 repräsentiert dabei die Menge der Gesamtinformation. Weiterhin weist die Leiste 31 eine Markierung 30 auf. Durch die Position der Markierung 30 auf der Leiste 31 wird dem ersten Nutzer N1 dargestellt, wie sich die erste Teilmenge der Gesamtinformation in der Menge der Gesamtinformation einordnen lässt. Dies bietet dem Nutzer eine Orientierung dafür, welche Menge an Gesamtinformation ihm noch zur Verfügung steht. Dabei ist insbesondere die Länge der Markierung 30 ausschlaggebend für die Größe der Menge der Gesamtinformation. Denn je kürzer die Markierung 30 ist, desto größer ist die Menge der Gesamtinformation.

Bei einer ausgeführten Wischgeste, wird die Markierung 30 dann in die Richtung, in welche die Wischgeste ausgeführt wird, auf der Leiste 31 verschoben.

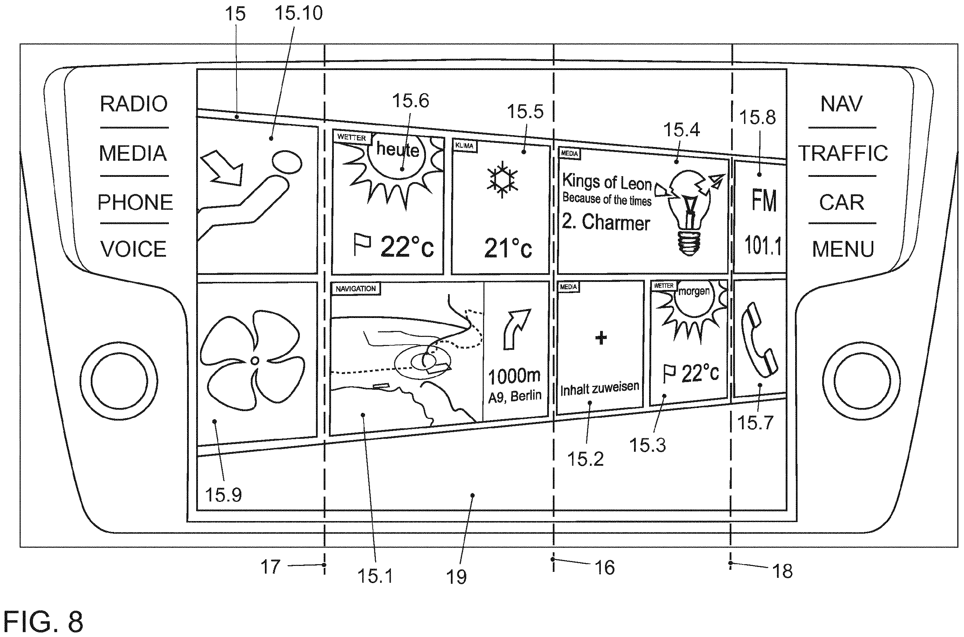

Im Folgenden wird ein weiteres Ausführungsbeispiel des erfindungsgemäßen Verfahrens mit Bezug zu den Figuren 4 und 8 erläutert.

Wiederum bildet die in Figur 4 gezeigte Anzeige den Ausgangspunkt des Verfahrens.

Der zweite Nutzer N2 bewegt das Betätigungsobjekt 7, also seine Hand, in den Erfassungsraum 8. Dies wird von der Annäherungserfassungseinrichtung 6 erfasst. Insbesondere wird über die Elektrodenanordnung 10 und die Ermittlungseinheit 6 ermittelt, dass es sich bei dem Nutzer mit Bedienabsicht um den zweiten Nutzer N2 handelt, welcher der Relativposition P2 zugeordnet ist. Die Relativposition P2 wird also über die Identifikation des Nutzers mit Bedienabsicht, also Nutzer N2, ermittelt.

Die Anzeigefläche wird derart angesteuert, dass das Objekt 15 in Richtung der Relativposition P2, also in Richtung des Beifahrers geschwenkt wird.

Der Schwenkwinkel δ kann voreingestellt sein, so dass sich lediglich die Richtung, in welche das Objekt 15 geschwenkt wird, über die Relativpositionen P1 und P2 bestimmt wird. Das Objekt 15 würde dann in Richtung der ersten Relativposition P1 um den gleichen Schwenkwinkel δ geschwenkt werden wie in Richtung der Relativposition P2.

Dabei wird im zweiten Ausführungsbeispiel des Verfahrens insbesondere aktiv zwischen Fahrer und Beifahrer unterschieden, während im ersten Ausführungsbeispiel eine Position bzw. ein Blickwinkel des Nutzers, der die Bedienabsicht hat, ermittelt wird.

Beide Verfahren können auch problemlos miteinander kombiniert werden. Beispielsweise können die Relativposition P1 und P2 über beide Verfahren gleichzeitig bestimmt werden. Beispielsweise kann dann lediglich eine Schwenkung des Objekts 15 um eine horizontal durch das Objekt verlaufende Achse in Abhängigkeit von der horizontalen Komponente γ abhängig sein, während der Schwenkwinkel um die vertikal durch das Objekt 16 verlaufende Achse 16 über einen voreingestellten Wert bestimmt wird.

Umfasst die Anzeigefläche 4 eine berührungsempfindliche Oberfläche, können Bedienaktionen auch direkt auf der Oberfläche der Anzeigefläche 4 ausgeführt werden.

Insbesondere kann das Objekt 15 auch in einer dreidimensionalen statt einer perspektivischen Ansicht für beide Ausgestaltungen des Verfahrens angezeigt werden.

### Bezugszeichenliste

- 1: Vorrichtung
- 2: Fahrzeug
- 3: Anzeigevorrichtung
- 4: Anzeigefläche
- 5: Steuereinrichtung
- 6: Erfassungseinrichtung; Annäherungserfassungseinrichtung
- 7: Betätigungsobjekt
- 8: Erfassungsraum
- 9: Ermittlungseinheit
- 10: Elektrodenanordnung
- 11: Fahrzeugsitz
- 12: vertikale Ebene
- 13: horizontale Ebene
- 14: Mittelpunkt zwischen den Augen eines Nutzers
- 15: Objekt
- 15.1 - 15.6: graphische Objekte; erste Teilmenge der Gesamtinformation
- 15.7 - 15.10: graphische Objekte; zweite Teilmenge der Gesamtinformation
- 16: Achse
- 17, 18: Begrenzungen
- 19: Bereich
- 20: Verfahren
- 21 -24: Verfahrensschritte
- 30: Markierung
- 31: Leiste
- N1, N2: erster Nutzer, zweiter Nutzer
- α, β: horizontale Komponente eines Blickwinkels
- γ: vertikale Komponente eines Blickwinkels
- δ: Schwenkwinkel
- B: Fahrzeuglängsrichtung

## Patentansprüche

1. Verfahren zum Bereitstellen einer graphischen Benutzerschnittstelle in einem Fahrzeug (2), bei dem
zumindest ein Objekt (15) zur Wiedergabe einer ersten Teilmenge (15.1 - 15.6) einer Gesamtinformation in zumindest einer ersten Darstellungsart auf einer Anzeigefläche (4) graphisch dargestellt wird und
eine Bedienabsicht eines Nutzers (N1, N2) erfasst wird,
**dadurch gekennzeichnet, dass**
die Relativposition (P1, P2) des Nutzers (N1, N2) bezüglich der Anzeigefläche (4) ermittelt wird und,
wenn die Bedienabsicht des Nutzers erfasst worden ist, das Objekt (15) in eine zweite Darstellungsart überführt wird, bei der das Objekt (15) perspektivisch oder dreidimensional um eine Achse (16) um einen Schwenkwinkel (δ) in Richtung der Relativposition (P1, P2) geschwenkt angezeigt wird.

2. Verfahren nach Anspruch 1,
**dadurch gekennzeichnet, dass**
ein Blickwinkel, unter dem der Nutzer (N1, N2) von der Relativposition (P1, P2) aus auf die Anzeigefläche (4) blickt, ermittelt wird,
der Blickwinkel in eine horizontale Komponente (α, β) und eine vertikale Komponente (γ) geteilt wird, wobei die horizontale Komponente (α, β) eine Winkelkomponente an dem Blickwinkel umfasst, den die Blickrichtung des Nutzers (N1, N2) von einer vertikalen, in Fahrzeuglängsrichtung angeordneten Ebene (12) seitlich abweicht, und die vertikale Komponente (γ) eine Winkelkomponente an dem Blickwinkel umfasst, den die Blickrichtung des Nutzers (N1, N2) von einer horizontal, in Fahrzeuglängsrichtung angeordneten Ebene (13) nach unten abweicht, und
der Schwenkwinkel (δ) des Objekts (15) in der zweiten Darstellungsart abhängig von der horizontalen (α, β) und/oder der vertikalen (γ) Komponente des Blickwinkels ist.

3. Verfahren nach Anspruch 1 oder 2,
**dadurch gekennzeichnet, dass**
die Achse (16), um welche das Objekt geschwenkt wird, im Wesentlichen horizontal oder im Wesentlichen vertikal durch das Objekt (15) verläuft.

4. Verfahren nach Anspruch 1, 2 oder 3,
**dadurch gekennzeichnet, dass**
ermittelt wird, ob ein erster oder ein zweiter Nutzer die Bedienabsicht hat, wobei für den ersten Nutzer (N1) eine erste Relativposition (P1) und für den zweiten Nutzer (N2) eine zweite Relativposition (P2) ermittelt wird.

5. Verfahren nach einem der Ansprüche 1 bis 4,
**dadurch gekennzeichnet, dass**
als Bedienabsicht eine Annäherung eines Betätigungsobjekts (7) seitens des Nutzers (N1, N2) an die Anzeigefläche (4) erfasst wird.

6. Verfahren nach einem der vorhergehenden Ansprüche,
**dadurch gekennzeichnet, dass**
bei der zweiten Darstellungsart angrenzend an die erste Teilmenge (15.1 - 15.6) der Gesamtinformation in dem Objekt (15) eine zweite Teilmenge (15.7 - 15.10) der Gesamtinformation angezeigt wird.

7. Verfahren nach Anspruch 6,
**dadurch gekennzeichnet, dass**
die erste Teilmenge (15.1 - 15.6) der Gesamtinformation in der zweiten Darstellungsart im Vergleich zur zweiten Teilmenge (15.7 - 15.10) der Gesamtinformation hervorgehoben dargestellt wird.

8. Verfahren nach einem der Ansprüche 6 oder 7,
**dadurch gekennzeichnet, dass**
in der zweiten Darstellungsart die zweite Teilmenge (15.7 - 15.10) der Gesamtinformation perspektivisch oder dreidimensional vorne und/oder hinten an die erste Teilmenge (15.1 - 15.6) der Gesamtinformation angrenzt.

9. Verfahren nach einem der Ansprüche 6, 7 oder 8,
**dadurch gekennzeichnet, dass**
in der zweiten Darstellungsart die erste Teilmenge (15.1 - 15.6) der Gesamtinformation in einem Bereich (19) auf der Anzeigefläche (4) angezeigt wird, der von einer ersten Begrenzung (17) und einer zweiten Begrenzung (18) begrenzt ist, wobei die erste Teilmenge (15.1 - 15.6) der Gesamtinformation im Vergleich zur zweiten Teilmenge (15.7 - 15.10) der Gesamtinformation hervorgehoben dargestellt wird, und
die erste Teilmenge (15.1 - 15.6) der Gesamtinformation und die zweite Teilmenge (15.7 - 15.10) der Gesamtinformation durch eine Bedienaktion des Nutzers (N1, N2) in ihren Positionen auf der Anzeigefläche (4) verschoben werden, wobei ein erster Teil der ersten Teilmenge (15.1 - 15.6) der Gesamtinformation aus dem Bereich (19) herausgeschoben wird, während ein zweiter Teil der zweiten Teilmenge (15.7 - 15.10) der Gesamtinformation in den Bereich (19) hineingeschoben wird, so dass der erste Teil nicht mehr hervorgehoben dargestellt wird, und der zweite Teil hervorgehoben dargestellt wird.

10. Verfahren nach Anspruch einem der vorhergehenden Ansprüche,
**dadurch gekennzeichnet, dass**
das eine Leiste (31) mit einer Markierung (30) angezeigt wird, wobei die Leiste die Gesamtmenge der Gesamtinformation repräsentiert und die Position der Markierung (30) auf der Leiste in Abhängigkeit von der Bedienaktion verschoben wird, wobei die Position der Markierung (30) auf der Leiste (31) die Position der ersten Teilmenge (15.1 - 15.6) der Gesamtinformation innerhalb der Gesamtmenge der Gesamtinformation darstellt.

11. Vorrichtung (1) zum Bereitstellen einer graphischen Nutzerschnittstelle in einem Fahrzeug (2) mit
einer Anzeigefläche (4) zur graphischen Darstellung zumindest eines Objekts (15) zur Wiedergabe einer ersten Teilmenge (15.1 - 15.6) einer Gesamtinformation und
einer Erfassungseinrichtung (6), mittels welcher eine Bedienabsicht eines Nutzers (N1, N2) erfassbar ist,
**gekennzeichnet durch**
eine Ermittlungseinheit (9), mittels welcher eine Relativposition (P1, P2) des Nutzers (N1, N2) bezüglich der Anzeigefläche (4) ermittelbar ist, und
eine Steuereinrichtung (5), mittels welcher Graphikdaten erzeugbar sind, die das Objekt (15) in einer ersten Darstellungsart wiedergeben, und mittels welcher das Objekt (15) in eine zweite Darstellungsart überführbar ist, bei der das Objekt (15) um eine Achse (16) um einen Schwenkwinkel (δ) in Richtung der Relativposition (P1, P2) geschwenkt anzeigbar ist, wenn die Bedienabsicht erfasst worden ist.

12. Vorrichtung (1) nach Anspruch 11,
**dadurch gekennzeichnet, dass**
die Erfassungseinrichtung (6) eine Annäherungserfassungseinrichtung umfasst, mittels welcher eine Annäherung eines Betätigungsobjekts (7) an die Anzeigefläche (4) erfassbar ist.

13. Vorrichtung (1) nach Anspruch 11 oder 12,
**dadurch gekennzeichnet, dass**
mit der Erfassungseinrichtung (6) ein Blickwinkel erfassbar ist, unter welchem der Nutzer (N1, N2) von der Relativposition (P1, P2) aus auf die Anzeigefläche blickt.

14. Vorrichtung (1) nach einem der Ansprüche 11 bis 13,
**dadurch gekennzeichnet, dass**
mit der Ermittlungseinheit (9) ermittelbar ist, ob ein erster (N1) oder ein zweiter Nutzer (N2) die Bedienabsicht hat, wobei dem ersten Nutzer (N1) eine erste Relativposition (P1) und dem zweiten Nutzer (N2) eine zweite Relativposition (P2) zugeordnet ist.

15. Fahrzeug mit einer Vorrichtung nach einem der Ansprüche 11 bis 14.

## Claims

1. Method for providing a graphical user interface in a vehicle (2), in which
at least one object (15) for reproducing a first subset (15.1 - 15.6) of a piece of total information is graphically depicted on a display panel (4) in at least one first type of depiction and
an operator control intention of a user (N1, N2) is detected,
**characterized in that**
the relative position (P1, P2) of the user (N1, N2) in relation to the display panel (4) is ascertained and,
if the operator control intention of the user has been detected, the object (15) is transferred to a second type of depiction, in which the object (15) is displayed in a manner perspectively or three-dimensionally swivelled about an axis (16) through a swivel angle (δ) in the direction of the relative position (P1, P2).

2. Method according to Claim 1,
**characterized in that**
a viewing angle at which the user (N1, N2) views the display panel (4) from the relative position (P1, P2) is ascertained,
the viewing angle is divided into a horizontal component (α, β) and a vertical component (γ), wherein the horizontal component (α, β) comprises an angle component of the viewing angle which the line of vision of the user (N1, N2) deviates laterally from a vertical plane (12) arranged in the longitudinal direction of the vehicle, and the vertical component (γ) comprises an angle component of the viewing angle which the line of vision of the user (N1, N2) deviates downwards from a horizontal plane (13) arranged in the longitudinal direction of the vehicle, and
the swivel angle (δ) of the object (15) in the second type of depiction is dependent on the horizontal (α, β) and/or the vertical (γ) component of the viewing angle.

3. Method according to Claim 1 or 2,
**characterized in that**
the axis (16) about which the object is swivelled runs substantially horizontally or substantially vertically through the object (15).

4. Method according to Claim 1, 2 or 3,
**characterized in that**
it is ascertained whether a first or a second user has the operator control intention, a first relative position (P1) being ascertained for the first user (N1) and a second relative position (P2) being ascertained for the second user (N2).

5. Method according to one of Claims 1 to 4,
**characterized in that**
the operator control intention detected is the user (N1, N2) bringing an operating object (7) closer to the display panel (4).

6. Method according to one of the preceding claims,
**characterized in that**
the second type of depiction involves a second subset (15.7 - 15.10) of the total information being displayed adjacently to the first subset (15.1 - 15.6) of the total information in the object (15).

7. Method according to Claim 6,
**characterized in that**
the first subset (15.1 - 15.6) of the total information is depicted in highlight in comparison with the second subset (15.7 - 15.10) of the total information in the second type of depiction.

8. Method according to either of Claims 6 and 7,
**characterized in that**
in a second type of depiction the second subset (15.7 - 15.10) of the total information is perspectively or three-dimensionally adjacent to the first subset (15.1 - 15.6) of the total information to the front and/or rear.

9. Method according to one of Claims 6, 7 and 8,
**characterized in that**
in the second type of depiction the first subset (15.1 - 15.6) of the total information is displayed in an area (19) on the display panel (4) that is bounded by a first boundary (17) and a second boundary (18), wherein the first subset (15.1 - 15.6) of the total information is depicted in highlight in comparison with the second subset (15.7 - 15.10) of the total information, and
the first subset (15.1 - 15.6) of the total information and the second subset (15.7 - 15.10) of the total information have their positions on the display panel (4) moved by an operator control action of the user (N1, N2), wherein a first portion of the first subset (15.1 - 15.6) of the total information is moved out of the area (19), while a second portion of the second subset (15.7 - 15.10) of the total information is moved into the area (19), so that the first portion is no longer depicted in highlight, and the second portion is depicted in highlight.

10. Method according to Claim one of the preceding claims,
**characterized in that**
a bar (31) having a marker (30) is displayed, wherein the bar represents the total set of the total information and the position of the marker (30) on the bar is moved on the basis of the operator control action, the position of the marker (30) on the bar (31) depicting the position of the first subset (15.1 - 15.6) of the total information within the total set of the total information.

11. Apparatus (1) for providing a graphical user interface in a vehicle (2) having
a display panel (4) for graphically depicting at least one object (15) for reproducing a first subset (15.1 - 15.6) of a piece of total information and
a detection device (6) by means of which an operator control intention of a user (N1, N2) is detectable, **characterized by**
an ascertainment unit (9) by means of which a relative position (P1, P2) of the user (N1, N2) in relation to the display panel (4) is ascertainable, and
a control device (5) by means of which graphics data that reproduce the object (15) in a first type of depiction are generable and by means of which the object (15) is transferrable to a second type of depiction, in which the object (15) is displayable in a manner swivelled about an axis (16) through a swivel angle (δ) in the direction of the relative position (P1, P2) when the operator control intention has been detected.

12. Apparatus (1) according to Claim 11,
**characterized in that**
the detection device (6) comprises an approach detection device by means of which an operating object (7) being brought closer to the display panel (4) is detectable.

13. Apparatus (1) according to Claim 11 or 12,
**characterized in that**
a viewing angle at which the user (N1, N2) views the display panel from the relative position (P1, P2) is detectable using the detection device (6).

14. Apparatus (1) according to one of Claims 11 to 13,
**characterized in that**
whether a first (N1) or a second (N2) user has the operator control intention is ascertainable using the ascertainment unit (9), wherein the first user (N1) has an associated first relative position (P1) and the second user (N2) has an associated second relative position (P2).

15. Vehicle having an apparatus according to one of Claims 11 to 14.

## Revendications

1. Procédé pour mettre à disposition une interface utilisateur graphique dans un véhicule (2), dans lequel
au moins un objet (15) est représenté graphiquement afin de reproduire un premier sous-ensemble (15.1 - 15.6) d'une information globale selon au moins un premier type de représentation sur une surface d'affichage (4) et
une intention de commande d'un utilisateur (N1, N2) est détectée,
**caractérisé en ce que** la position relative (P1, P2) de l'utilisateur (N1, N2) par rapport à la surface d'affichage (4) est déterminée et,
lorsque l'intention de commande de l'utilisateur a été détectée, l'objet (15) est converti dans un deuxième type de représentation dans lequel l'objet (15) est affiché en perspective ou de manière tridimensionnelle en étant amené à pivoter autour d'un axe (16) d'un angle de pivotement (δ) en direction de la position relative (P1, P2).

2. Procédé selon la revendication 1,
**caractérisé en ce qu'**un angle de vue sous lequel l'utilisateur (N1, N2) voit la zone d'affichage (4) à partir de la position relative (P1, P2) est déterminé, **en ce que** l'angle de vue est divisé en une composante horizontale (α, β) et une composante verticale (γ), dans lequel la composante horizontale (α, β) comprend une composante angulaire de l'angle de vue qui la direction de visée de l'utilisateur (N1, N2) s'écarte latéralement d'un plan vertical (12) disposé dans la direction longitudinale du véhicule, et la composante verticale (γ) comprend une composante angulaire de l'angle de vue qui la direction de visée de l'utilisateur (N1, N2) s'écarte vers le bas d'un plan horizontal (13) disposé dans la direction longitudinale du véhicule, et
l'angle de pivotement (δ) de l'objet (15) dans le deuxième type de représentation dépend de la composante horizontale (α, β) et/ou verticale (γ) de l'angle de vue.

3. Procédé selon la revendication 1 ou 2,
**caractérisé en ce que** l'axe (16) autour duquel l'objet est amené à pivoter s'étend sensiblement horizontalement ou verticalement à travers l'objet (15) .

4. Procédé selon la revendication 1, 2 ou 3,
**caractérisé en ce qu'**il est déterminé si un premier ou un deuxième utilisateur présente l'intention de commande, dans lequel une première position relative (P1) est déterminée pour le premier utilisateur (N1) et une deuxième position relative (P2) est déterminée pour le deuxième utilisateur (N2).

5. Procédé selon l'une des revendications 1 à 4,
**caractérisé en ce qu'**un rapprochement d'un objet d'actionnement (7) côté utilisateur (N1, N2) par rapport à la surface d'affichage (4) est détecté en tant qu'intention de commande.

6. Procédé selon l'une des revendications précédentes,
**caractérisé en ce que**, dans le deuxième type de représentation, un deuxième sous-ensemble (15.7 - 15.10) des informations globales est affiché dans l'objet (15) de manière adjacente au premier sous-ensemble (15.1 - 15.6) de l'information globale.

7. Procédé selon la revendication 6,
**caractérisé en ce que** le premier sous-ensemble (15.1 - 15.6) de l'information globale est représenté en surbrillance dans le deuxième type de représentation par comparaison au deuxième sous-ensemble (15.7 - 15.10) de l'information globale.

8. Procédé selon l'une des revendications 6 ou 7,
**caractérisé en ce que**, dans le deuxième type de représentation, le deuxième sous-ensemble (15.7 - 15.10) de l'information globale est adjacent, en perspective ou de manière tridimensionnelle, à l'avant et/ou à l'arrière, au premier sous-ensemble (15.1 - 15.6) de l'information globale.

9. Procédé selon l'une des revendications 6, 7 ou 8, **caractérisé en ce que**,
dans le deuxième type de représentation, le premier sous-ensemble (15.1 - 15.6) de l'information globale est affiché sur la surface d'affichage (4) dans une zone (19 qui est délimitée par une première délimitation (17) et par une deuxième délimitation (18), dans lequel le premier sous-ensemble (15.1 - 15.6) de l'information globale est représenté en surbrillance par comparaison au deuxième sous-ensemble (15.7 - 15.10) de l'information globale, et
le premier sous-ensemble (15.1 - 15.6) de l'information globale et le deuxième sous-ensemble (15.7 - 15.10) de l'information globale sont soumis à un décalage de leur position sur la surface d'affichage (4) par une action de commande de l'utilisateur (N1, N2), dans lequel une première partie du premier sous-ensemble (15.1 -15.6) de l'information globale est glissée hors de la zone (19), tandis qu'une deuxième partie du deuxième sous-ensemble (15.7 - 15.10) de l'information globale est amenée à glisser dans la zone (19), de manière à ce que la première partie ne soit plus représentée en surbrillance et que la deuxième partie soit représentée en surbrillance.

10. Procédé selon la revendication l'une des revendications précédentes,
**caractérisé en ce que** ladite barre (31) est représentée avec un marquage (30), dans lequel la barre représente la quantité totale de l'information globale et la position du marquage (30) sur la barre est amenée à glisser en fonction de l'action de commande, dans lequel la position du marquage (30) sur la barre (31) représente la position du premier sous-ensemble (15.1 - 15.6) de l'information globale au sein de la quantité totale de l'information globale.

11. Dispositif (1) pour mettre à disposition une interface utilisateur graphique dans un véhicule (2), comportant
une surface d'affichage (4) destinée à représenter graphiquement au moins un objet (15) afin de reproduire un premier sous-ensemble (15.1 - 15.6) d'une information globale et
un dispositif de détection (6) au moyen duquel il est possible de détecter une intention de commande d'un utilisateur (N1, N2),
**caractérisé par** une unité de détermination (9), au moyen de laquelle il est possible de déterminer une position relative (P1, P2) de l'utilisateur (N1, N2) par rapport à la surface d'affichage (4), et
un dispositif de commande (5) au moyen duquel il est possible de générer des données graphiques qui reproduisent l'objet (15) dans un premier type de représentation, et au moyen duquel l'objet (15) peut être converti en un deuxième type de représentation dans lequel l'objet (15) peut être affiché de manière pivotée autour d'un axe (16) d'un angle de pivotement (δ) en direction de la position relative (P1, P2) lorsque l'intention de commande a été détectée.

12. Dispositif (1) selon la revendication 11,
**caractérisé en ce que** le dispositif de détection (6) comprend un dispositif de détection de rapprochement au moyen duquel il est possible de détecter un rapprochement d'un objet d'actionnement (7) de la surface d'affichage (4).

13. Dispositif (1) selon la revendication 11 ou 12,
**caractérisé en ce que** le dispositif de détection (6) permet de détecter un angle de vision sous lequel l'utilisateur (N1, N2) voit la surface d'affichage à partir de la position relative (P1, P2).

14. Dispositif (1) selon l'une des revendications 11 à 13,
**caractérisé en ce que** l'unité de détermination (9) permet de déterminer si un premier (N1) ou un deuxième (N2) utilisateur présente l'intention de commande, dans lequel une première position relative (P1) est associée au premier utilisateur (N1) et une deuxième position relative (P2) est associée au deuxième utilisateur (N2).

15. Véhicule comportant un dispositif selon l'une des revendications 11 à 14.
